(19) **Europäisches Patentamt**

**European Patent Office**

**Office européen des brevets**

(11) **EP 2 811 634 A1**

(12) **EUROPÄISCHE PATENTANMELDUNG**

(43) Veröffentlichungstag:
  **10.12.2014 Patentblatt 2014/50**

(51) Int Cl.:
  *H02M 1/32* (2007.01)  *H05B 33/08* (2006.01)

(21) Anmeldenummer: **14169248.3**

(22) Anmeldetag: **21.05.2014**

(84) Benannte Vertragsstaaten:
  **AL AT BE BG CH CY CZ DE DK EE ES FI FR GB GR HR HU IE IS IT LI LT LU LV MC MK MT NL NO PL PT RO RS SE SI SK SM TR**
  Benannte Erstreckungsstaaten:
  **BA ME**

(30) Priorität: **07.06.2013 DE 102013210641**

(71) Anmelder: **Automotive Lighting Reutlingen GmbH 72762 Reutlingen (DE)**

(72) Erfinder:
  • **Blum, Dirk**
    **72076 Tübingen (DE)**
  • **Schmid, Oliver**
    **72149 Neustetten (DE)**
  • **Bormann, Uwe**
    **89520 Heidenheim (DE)**

(74) Vertreter: **DREISS Patentanwälte PartG mbB Patentanwälte Gerokstrasse 1 70188 Stuttgart (DE)**

(54) **Verfahren zum Einstellen einer Stromstärke zum Betreiben einer Halbleiterlichtquelle einer Beleuchtungseinrichtung**

(57) Die vorliegende Erfindung betrifft ein Verfahren zum Einstellen einer Stromstärke ($I_A$) zum Betreiben mindestens einer Halbleiterlichtquelle (12) einer Beleuchtungseinrichtung. Dabei wird eine in einem Speicherelement eines zum Betreiben der mindestens einen Halbleiterlichtquelle (12) verwendeten Gleichspannungswandlers (10) gespeicherte Energie ermittelt und daraus die Stromstärke ($I_A$) zum Betrieb der mindestens einen Halbleiterlichtquelle (12) eingestellt. Das Speicherelement umfasst vorzugsweise eine Speicherdrossel (14) und/oder einen Speicherkondensator.

Fig. 1

EP 2 811 634 A1

**Beschreibung**

Die vorliegende Erfindung betrifft ein Verfahren zum Einstellen einer Stromstärke zum Betreiben mindestens einer Halbleiterlichtquelle einer Beleuchtungseinrichtung. Außerdem betrifft die Erfindung ein Steuergerät zum Betreiben mindestens einer Halbleiterlichtquelle einer Beleuchtungseinrichtung. Dabei handelt es sich vorzugsweise um eine Beleuchtungseinrichtung für ein Fahrzeug, insbesondere ein Kraftfahrzeug. Die Beleuchtungseinrichtung kann eine beliebige Fahrzeugleuchte oder ein Fahrzeugscheinwerfer sein. Ja nach gewünschter maximaler Beleuchtungsstärke, je nach gewünschter Kontur und Beleuchtungsstärkeverteilung der resultierenden Lichtverteilung und/oder je nach gewünschtem Leuchtbild, das ein Beobachter beim Blick auf die Beleuchtungseinrichtung sieht, kann die Beleuchtungseinrichtung eine oder mehrere seriell oder parallel miteinander verschaltete Halbleiterlichtquellen, insbesondere Leuchtdioden (LEDs), umfassen. Insbesondere können mehrere Halbleiterlichtquellen zu LED-Ketten zusammengefasst werden, von denen die Beleuchtungseinrichtung eine oder mehrere vorzugsweise parallel zueinander verschaltete umfasst.

Aus dem Stand der Technik ist es bekannt, eine Stromstärke zum Betreiben von Halbleiterlichtquellen mittels eines niederohmigen Messwiderstands (eines sog. Shunts) zu ermitteln. Der Messwiderstand ist dabei in dem zu messenden Stromkreis angeordnet. Die an dem Widerstand abfallende Spannung wird gemessen. Die zu erfassende Stromstärke wird dabei aus dem Spannungsabfall am Messwiderstand und dem Widerstandswert des Messwiderstands ermittelt. Die Ermittlung geschieht z.B. in einer Verarbeitungseinrichtung, die vorzugsweise einen Mikroprozessor aufweist, auf dem ein Computerprogramm zur Ermittlung der Stromstärke abläuft. Die Verarbeitungseinrichtung kann Teil eines zum Betreiben der Halbleiterlichtquellen der Beleuchtungseinrichtung vorgesehenen Gleichspannungswandlers oder eines Steuergeräts der Beleuchtungseinrichtung sein.

Bei einer sog. Lowside-Anordnung des Messwiderstands kann die abfallenden Spannung direkt gegen Masse erfasst und daraus der Stromwert der Halbleiterlichtquellen ermittelt werden. Bei einer sog. Highside-Anordnung des Messwiderstands ist zum Erfassen des Spannungsabfalls eine Zusatzbeschaltung erforderlich, damit der Gleichspannungswandler oder ein Mikrocontroller den Messwert auswerten und den Stromwert der Halbleiterlichtquellen ermitteln kann.

Die bekannten Maßnahmen zur Strommessung sind aufgrund der Verwendung des Messwiderstands jedoch verlustbehaftet und weisen zudem durch den Messwiderstand und der eventuell nötigen Zusatzbeschaltung eine Vielzahl von Bauelementen auf, die auf einer Leiterplatte angeordnet werden müssen (aufwendige und teure Herstellung) und dort viel Platz benötigen (großer Platzbedarf für Steuergerät bzw. Verarbeitungseinrichtung der Beleuchtungseinrichtung).

Ein Gleichspannungswandler (DC/DC-Wandler) liefert die zum Betreiben von Halbleiterlichtquellen nötige elektrische Leistung. Um je nach Leistungsbedarf bei gegebener Betriebsspannung den entsprechenden Strom einstellen bzw. regeln zu können, muss die aktuelle Stromstärke des Betriebsstroms (Istwert für die Regelung) bekannt sein.

Der Gleichspannungswandler bezeichnet eine elektrische Schaltung, die eine am Eingang zugeführte Gleichspannung in eine am Ausgang anliegende Gleichspannung mit höherem, niedrigerem oder invertiertem Spannungsniveau umwandelt. Die Umsetzung erfolgt mithilfe eines Schalters, der vorzugsweise im kHz-Bereich betrieben wird, und mindestens eines Energiespeichers. Als Speicherelement kann eine Speicherdrossel und/oder ein Speicherkondensator zum Einsatz kommen. Während eines Ladevorgangs ist der Schalter geschlossen und das Speicherelement wird von der am Eingang anliegenden Energie aufgeladen. Während eines Entladevorgangs wird die gespeicherte Energie an einen Verbraucher, bspw. die mindestens eine Halbleiterlichtquelle, abgegeben. Durch geeignete Ansteuerung des Schalters kann der Ausgangsstrom bzw. die Ausgangsspannung des Gleichspannungswandlers eingestellt werden. Der Schalter ist vorzugsweise als ein elektrischer Schalter, bspw. als ein Transistor, ausgebildet, der mittels eines elektrischen Ansteuersignals angesteuert wird. Das Ansteuersignal hat üblicherweise eine Frequenz im kHz-Bereich oder im unteren MHz-Bereich.

Aus der DE 10 2010 061 042 A1 ist ein Gleichspannungswandler bekannt, bei dem anstelle einer Messung des durch eine Speicherdrossel fließenden Stroms ein den Strom nachbildendes Signal auf eine aufwendige Weise ermittelt wird, wobei Gleichanteile und Wechselanteile des Stroms unterschiedlich behandelt werden.

Der bekannte Gleichspannungswandler weist den Nachteil auf, dass er viele Bauteile bzw. Komponenten benötigt, die zur Nachbildung des Stroms dienen, so dass der Gleichspannungswandler aufwendig und teuer ist. Außerdem benötigt der bekannte Wandler für die vielen Bauteile bzw. Komponenten eine relativ große Leiterplattenfläche, was zusätzlichen Bauraum z.B. in einem Steuergerät erfordert.

Aufgabe der Erfindung ist es deshalb, einen Gleichspannungswandler der eingangs genannten Art dahingehend auszugestalten und weiterzubilden, dass die Anzahl der benötigten Bauteile und die benötigte Leiterplattenfläche reduziert werden.

Die Aufgabe wird erfindungsgemäß durch ein Verfahren der eingangs genannten Art gelöst, wobei eine in einem Speicherelement eines zum Betreiben der mindestens einen Halbleiterlichtquelle verwendeten Gleichspannungswandlers gespeicherte Energie ermittelt und daraus die Stromstärke zum Betrieb der mindestens einen Halbleiterlichtquelle eingestellt wird.

Die ermittelte Stromstärke kann zum Betreiben einer oder mehrerer Halbleiterlichtquellen der Beleuchtungseinrichtung dienen und z.B. zum Betrieb einer Leuchtdioden-Matrix einer Beleuchtungseinrichtung eines Kraftfahrzeugs. Insbesondere kann der gemessene Istwert des durch die Halbleiterlichtquelle fließenden Stroms zur Regelung des Stroms herangezogen werden.

Der Erfindung liegt die Idee zu Grunde, auf eine Strommessung mittels eines Messwiderstands zu verzichten und stattdessen den Strom durch die mindestens eine Halbleiterlichtquelle auf der Basis der in dem Speicherelement gespeicherten Energie des Gleichspannungswandlers zu ermitteln. Dabei wird davon ausgegangen, dass der Strom durch die Halbleiterlichtquellen abhängig ist von, vorzugsweise sogar proportional ist zu, der in dem Speicherelement gespeicherten Energie. Erfindungsgemäß wird ein Verfahren geschaffen, durch das die Stromstärke zum Betreiben von Halbleiterlichtquellen einer Beleuchtungseinrichtung möglichst verlustfrei ermittelt werden kann. Das bedeutet, dass elektrische Verluste, die beim Messen des Stroms auftreten können, minimiert oder gar eliminiert werden. Außerdem ermöglicht die Erfindung eine Ermittlung des Stroms mit besonders wenigen Bauteilen, so dass ein einfacher und kostengünstiger Aufbau des Gleichspannungswandlers oder eines Steuergeräts der Beleuchtungseinrichtung gegeben ist. Zudem benötigt eine Vorrichtung zur Realisierung des erfindungsgemäßen Verfahrens eine besonders kleine Leiterplattenfläche.

Die Energie in dem Speicherelement kann z.B. in einem Magnetfeld einer Speicherdrossel, die eine vorgegebene Induktivität aufweist, gespeichert sein. Alternativ oder zusätzlich kann die Energie in einem Speicherkondensator gespeichert sein, der eine vorgegebene Kapazität aufweist. Zur Ermittlung des Stroms werden neben der gespeicherten Energie auch andere Einflussfaktoren berücksichtigt, wie bspw. Betriebsgrößen oder Betriebsparameter des Gleichspannungswandlers oder von seinen Komponenten. Die des Weiteren berücksichtigten Betriebsgrößen und Betriebsparameter umfassen bspw. eine oder mehrere der nachfolgenden Größen: ein Induktivitätswert bzw. ein Kapazitätswerts des Speicherelements, eine Eingangsspannung ($U_E$) des Gleichspannungswandlers, eine Ausgangsspannung ($U_A$) des Gleichspannungswandlers, eine Temperatur des Gleichspannungswandlers oder von Teilen davon, einen Kapazitätswert eines am Ausgang des Gleichspannungswandlers angeordneten Kondensators, einen elektrischen Widerstandswert des Gleichspannungswandlers oder eines darin vorgesehenen elektrischen Widerstands, eine elektrischen Eigenschaft einer Diode des Gleichspannungswandlers, einen Tastgrad eines Schalters des Gleichspannungswandlers zum Umschalten zwischen einem Ladevorgang und einem Entladevorgang des Speicherelements.

Es werden im erfindungsgemäßen Verfahren also einerseits vorgegebene, also während des Betriebs im Wesentlichen konstante, charakteristische Betriebsgrößen der Schaltung bzw. von deren Bauelementen zur Ermittlung der gespeicherten Energie und der Stromstärke berücksichtigt. Andererseits werden dynamische Betriebsgrößen des Gleichspannungswandlers bzw. von deren Bauelementen und/oder Komponenten berücksichtigt, wobei diese vorzugsweise während des Betriebs des Gleichspannungswandlers und damit der Beleuchtungseinrichtung ermittelt werden. Außerdem ist es möglich, Betriebsgrößen des Gleichspannungswandlers zu berücksichtigen, die vor einer Ausführung des erfindungsgemäßen Verfahrens schon ermittelt wurden, bspw. in einem beliebigen Steuergerät des Kraftfahrzeugs. Diese Betriebsgrößen können der Vorrichtung zur Realisierung des erfindungsgemäßen Verfahrens bspw. über einen Datenbus zur weiteren Verwendung zur Verfügung gestellt werden.

Die Stromstärke zum Betreiben der mindestens einen Halbleiterlichtquelle wird im erfindungsgemäßen Verfahren auf der Basis der gespeicherten Energie in der Speicherdrossel bzw. im Speicherkondensator ermittelt. Die in einer Speicherdrossel gespeicherte Energie ist direkt abhängig von der Induktivität der Speicherdrossel und dem Eingangsstrom des Gleichspannungswandlers. Die gespeicherte Energie des Speicherkondensators ist direkt abhängig von der Kapazität des Speicherkondensators und der am Speicherkondensator bzw. am Gleichspannungswandler anliegenden Spannung. Die Induktivität bzw. Kapazität ist dabei jeweils eine konstante Betriebsgröße (oder auch Betriebsparameter), der Eingangsstrom bzw. die Eingangsspannung muss im laufenden Betrieb ermittelt werden.

Damit durch das erfindungsgemäße Verfahren eine schnelle Ermittlung der vom Gleichspannungswandler abgegebenen Stromstärke realisiert werden kann, wird bspw. in einem Mikroprozessor ein pulsweitenmoduliertes Ansteuersignal zum Schalten des Schalters des Gleichspannungswandlers erzeugt. Durch die Ansteuerung des Schalters wird im Wesentlichen die abgegebene elektrische Leistung des Gleichspannungswandlers eingestellt. Vorzugsweise umfasst der Mikroprozessor möglichst schnelle Analog/Digital Kanäle und ist mit einer hohen Rechenleistung ausgestattet.

Das erfindungsgemäße Verfahren kann vom Prinzip her für alle bekannten Gleichspannungswandler-Topologien angewandt werden. Insbesondere kann die Erfindung in einer positiven oder negativen Ladungspumpe, einem Abwärtswandler (Buck-Converter), einem Aufwärtswandler (Boost-Converter), Inverswandler (Buck-Boost-Converter), Synchronwandler, SEPIC-Wandler (Single Ended Primary Inductance Converter), und anderen eingesetzt werden.

Die Eingangs- und/oder die Ausgangsspannung kann nach bekannten Verfahren jeweils im Wesentlichen ohne Belastung des Gleichspannungswandlers ermittelt werden. Die so ermittelten Werte können anschließend bei der Ermittlung der Ausgangsstromstärke des Gleichspannungswandlers im erfindungsgemäßen Verfahren berücksichtigt werden.

Außerdem kann im erfindungsgemäßen Verfahren z.B. ein Eingangswiderstand und/oder ein Ausgangswiderstand des Gleichspannungswandlers ermittelt und berücksichtigt werden. Die Widerstände stellen im Wesentlichen konstante Größen dar, wobei bei Bedarf bei der Ermittlung des jeweiligen Widerstands auch der Tastgrad der Pulsweitenmodulation berücksichtigt werden kann.

Ferner können die elektrischen Eigenschaften der Diode des Gleichspannungswandlers im erfindungsgemäßen Verfahren berücksichtigt werden. In den Gleichspannungswandlern ist eine Diodenfunktion unverzichtbar. So kann z.B. eine Strom-/ Spannungskennlinie der Diode bspw. in einem Speicherbereich eines Steuergeräts zum Betreiben der mindestens einen Halbleiterlichtquelle abgelegt sein, die dann zur Ermittlung der gespeicherten Energie und der Stromstärke der Halbleiterlichtquellen herangezogen werden kann. Insbesondere die elektrischen Eigenschaften der Diode in einem Grenzbereich beim Sperren und Durchlassen des Stroms können berücksichtigt werden.

Auch die elektrischen Eigenschaften des Kondensators am Ausgang des Gleichspannungswandlers können z.B. in gleicher Weise über Kennlinien im erfindungsgemäßen Verfahren berücksichtigt werden. Ferner kann auch die Kapazität des Kondensators berücksichtigt werden. Der Kondensator dient vor allem zum Glätten des Ausgangsstroms des Gleichspannungswandlers und damit des Betriebsstroms der Halbleiterlichtquellen.

Außerdem kann eine Temperatur des Gleichspannungswandlers oder von Teilen davon im erfindungsgemäßen Verfahren berücksichtigt werden. Dazu können weitere Kennlinien im Steuergerät abgelegt sein, die eine Temperaturabhängigkeit der elektrischen Bauteile beschreiben. Die dazu nötige Temperaturermittlung kann ohne Belastung des Gleichspannungswandlers durchgeführt werden. Dadurch ist bei unterschiedlichen Temperaturen eine sehr exakte Ermittlung und Einstellung der Stromstärke zum Betreiben der mindestens einen Halbleiterlichtquelle möglich.

Der Tastgrad des Schalters des Gleichspannungswandlers wird z.B. im Steuergerät zum Betreiben der mindestens einen Halbleiterlichtquelle vorgegeben und steht somit bereits für das erfindungsgemäße Verfahren zur Verfügung. Die in dem Speicherelement gespeicherte Energie ist in hohem Maße abhängig von dem Tastgrad des Schalters. Dabei kommt es insbesondere auf das Zeitverhältnis zwischen geschlossenem Schalter (Ladevorgang) und geöffnetem Schalter (Entladevorgang) an.

Das erfindungsgemäße Verfahren ist bevorzugt in einem Steuergerät zum Betreiben mindestens einer Halbleiterlichtquelle einer Beleuchtungseinrichtung ablauffähig. Das Steuergerät umfast dabei eine Verarbeitungseinrichtung, auf der ein Computerprogramm abläuft, das zur Ausführung des erfindungsgemäßen Verfahrens programmiert ist. Dabei kann der Gleichspannungswandler Teil der Verarbeitungseinrichtung und/oder des Steuergeräts sein. Er kann aber auch eine separate Vorrichtung sein.

Weitere Merkmale und Vorteile der vorliegenden Erfindung ergeben sich aus der nachfolgenden Beschreibung und den beigefügten Figuren. Es zeigen:

Figur 1 eine Vorrichtung zur Realisierung des erfindungsgemäßen Verfahrens gemäß einer bevorzugten Ausführungsform;

Figur 2 eine schematische Darstellung eines Gleichspannungswandlers zur Realisierung des erfindungsgemäßen Verfahrens gemäß einer bevorzugten Ausführungsform;

Figur 3 den Gleichspannungswandler aus Figur 2 während eines Ladevorgangs; und

Figur 4 den Gleichspannungswandler aus Figur 2 während eines Entladevorgangs.

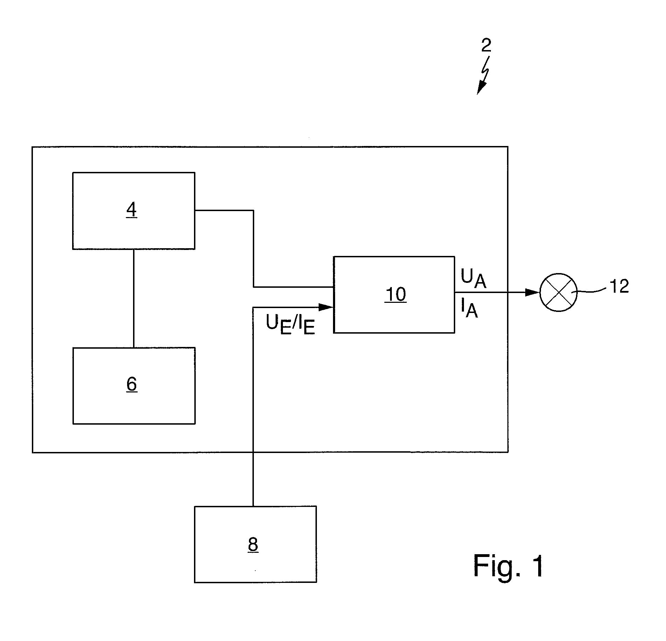

Figur 1 zeigt das Umfeld der Erfindung. Ein Steuergerät 2 umfasst dabei eine elektronische Verarbeitungseinrichtung 4, die bspw. einen Mikroprozessor oder einen Mikrocontroller aufweisen kann. In der Verarbeitungseinrichtung 4 ist ein erfindungsgemäßes Verfahren ablauffähig. Die Verarbeitungseinrichtung 4 weist eine Datenübertragungsverbindung zu einem Speicherelement 6 auf. Auf dem Speicherelement 6 ist ein Computerprogramm gespeichert, das zur Ausführung des erfindungsgemäßen Verfahrens programmiert ist. Ferner können auf dem Speicherelement 6 notwendige Betriebsgrößen und Betriebsparameter, die zur Ausführung des erfindungsgemäßen Verfahrens benötigt werden, sowie auch andere Daten abgelegt sein und/oder während der Ausführung des Verfahrens abgelegt werden.

Das Steuergerät 2 dient bevorzugt zum Betreiben einer Beleuchtungseinrichtung eines Kraftfahrzeugs. Dabei umfasst die Beleuchtungseinrichtung mindestens eine Halbleiterlichtquelle 12, insbesondere eine oder mehrere Leuchtdioden (LEDs). Zum Betreiben der mindestens einen Halbleiterlichtquelle 12 steuert bzw. regelt die Verarbeitungseinheit 4 einen Gleichspannungswandler 10, der die mindestens eine Halbleiterlichtquelle 12 mit elektrischer Energie versorgt. Der Gleichspannungswandler 10 dient im Wesentlichen dazu, eine am Eingang angelegte Gleichspannung in eine Gleichspannung - je nach Bedarf - mit höherem, niedrigerem oder invertiertem Spannungsniveau zum Betreiben der mindestens einen Halbleiterlichtquelle 12 umzuwandeln. Die Steuerung bzw. Regelung dient dazu, die zum Betreiben der mindestens einen Halbleiterlichtquelle 12 erforderliche Stromstärke einzustellen

Eine Eingangsspannung für den Gleichspannungswandler 10 wird von einer elektrischen Versorgungseinrichtung 8, bspw. einer Kraftfahrzeug-Batterie oder einem elektrischen Generator, z.B. einer Lichtmaschine des Kraftfahrzeugs geliefert. Der Gleichspannungswandler 10 könnte auch außerhalb des Steuergeräts 2 angeordnet sein. Er kann zur Verbesserung einer elektromagnetischen Verträglichkeit (EMV) auch abgeschirmt sein, indem er bspw. in einem Metallgehäuse angeordnet ist.

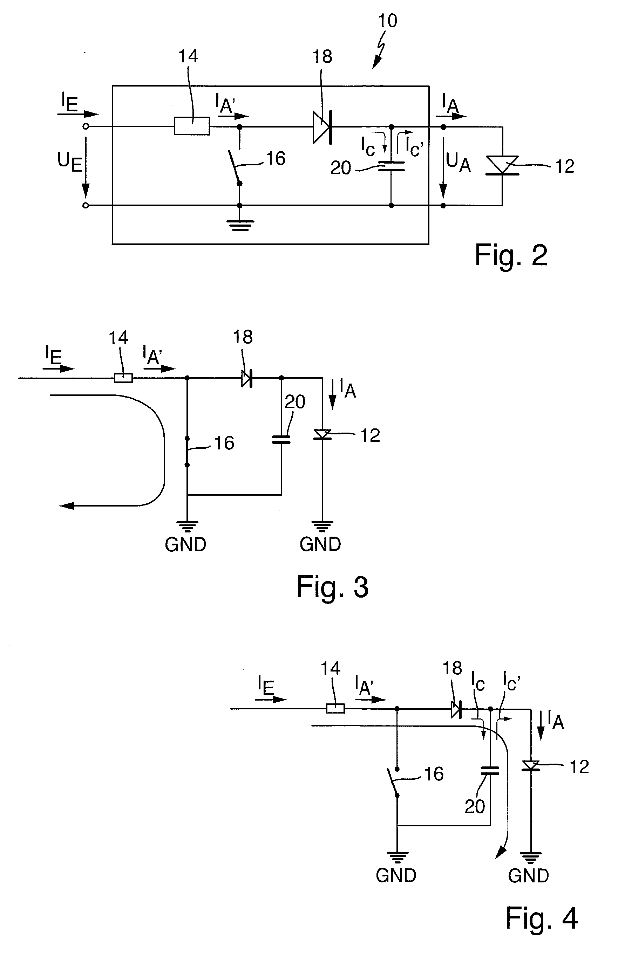

Figur 2 zeigt eine schematische Darstellung des Gleichspannungswandlers 10 gemäß einem bevorzugten Ausführungsbeispiel. Der in Figur 2 dargestellte Gleichspannungswandler 10 zeigt beispielhaft eine Topologie eines sog. Boost-Wandlers oder Hochsetzstellers. Das erfindungsgemäße Verfahren kann prinzipiell jedoch für alle bekannten Gleichspannungswandler-Topologien angewandt werden.

Am Gleichspannungswandler 10 liegt eingangsseitig eine Gleichspannung $U_E$ der Versorgungseinrichtung 8 an. In den Gleichspannungswandler 10 fließt ein Strom $I_E$ durch ein als eine Speicherdrossel 14 ausgebildetes Speicherelement. Die Speicherdrossel 14 weist eine bekannte Induktivität L auf. Der Gleichspannungswandler 10 kann auch mehrere Speicherdrosseln 14 umfassen, die voneinander galvanisch getrennt sein können. Ausgangsseitig fließt von der Speicherdrossel 14 ein Strom $I_A$' entweder über ein Schaltelement 16, wenn dieses geschlossen ist, oder durch eine Diode 18 zum Ausgang des Gleichspannungswandlers 10, wenn das Schaltelement 16 geöffnet ist. Bei geschlossenem Schaltelement 16 wird magnetische Energie in der Speicherdrossel 14 aufgebaut. Bei geöffnetem Schaltelement 16 gibt die Speicherdrossel 14 die gespeicherte Energie an den Ausgang des Gleichspannungswandlers 10 ab.

Am Ausgang des Gleichspannungswandlers 10 liegt eine Ausgangsspannung $U_A$ an und es fließt ein Strom $I_A$ zum Betreiben der mindestens einen an den Ausgang angeschlossenen Halbleiterlichtquelle 12. Parallel zu der Halbleiterlichtquelle 12 weist der Gleichspannungswandler 10 in diesem Ausführungsbeispiel an seinem Ausgang einen Kondensator 20 auf. Dieser dient einerseits zur Entstörung (Verbesserung der EM-Verträglichkeit) des Gleichspannungswandlers 10 und andererseits zur Glättung des ausgangsseitigen Stroms $I_A$. Der Kondensator 20 weist bevorzugt eine relativ hohe Kapazität auf. Ausführungsbeispiele eines Gleichspannungswandlers 10 auch ohne ausgangsseitig angeordneten Kondensator 20 sind jedoch auch denkbar, bspw. bei einem sog. Buck-Converter.

Die Speicherdrossel 14 dient im Gleichspannungswandler 10 als Energiespeicher. Alternativ oder zusätzlich ist es in anderen Ausgestaltungen der Schaltung (anderen Arten von Gleichspannungswandlern) auch möglich, dass ein Speicherkondensator (nicht dargestellt) als Energiespeicher dient. Dies kann bspw. bei einem als sog. Ladungspumpe ausgebildeten Gleichspannungswandler der Fall sein.

Das Schaltelement 16 stellt eine periodisch arbeitende elektronische Schalteinrichtung dar, die vorzugsweise mit einem pulswellenmodulierten (PWM) Signal im kHz-Bereich oder im unteren MHz-Bereich geschaltet wird. Das Schaltelement 16 könnte z.B. als ein Transistor, insbesondere als ein Feldeffekttransistor, ausgebildet sein, wobei das PWM-Signal am Schalt- oder Steuereingang des Transistors anliegt. Gängige Schaltfrequenzen liegen zwischen 100 kHz und 1 MHz und legen den Tastgrad der Pulsweitenmodulation fest. In einem optimierten Verfahren kann z.B. die Schaltfrequenz derart eingestellt werden, dass das Schaltelement 16 genau dann schließt, wenn zumindest annähernd die gesamte gespeicherte Energie der Speicherdrossel 14 zum Ausgang übertragen worden ist (sog. Quasi-Resonanzmode). Hierdurch wird eine Verlustleistung des Gleichspannungswandlers 10 verringert und werden die EMV-Eigenschaften des Gleichspannungswechslers 10 verbessert.

Mit Hilfe der Figuren 3 und 4 soll die grundsätzliche Funktion des Gleichspannungswandlers 10 aus Figur 2 genauer erläutert und dabei auch das erfindungsgemäße Verfahren erklärt werden. In einer ersten Betriebsphase, wie in Figur 3 dargestellt, ist das Schaltelement 16 geschlossen (Ladevorgang). Dabei liegt die Eingangsspannung $U_E$ an der Speicherdrossel 14 an, wodurch sich in der Speicherdrossel 14 der Strom $I_E$ einstellt und damit auch eine magnetische Energie aufbaut. Die dabei speicherbare Energie W errechnet sich nach der Formel

$$W = \frac{1}{2} * L * I_E{}^2$$

wobei W die magnetische Energie, L die Induktivität der Speicherdrossel 14 und $I_E$ den Eingangsstrom bezeichnet.

Der in der Speicherdrossel 14 aufgenommene Strom $I_E$ kann auf Grund der Trägheit der Induktivität L nicht sprunghaft, sondern nur allmählich geändert werden. Wird also, wie in Figur 4 gezeigt, das Schaltelement 16 geöffnet (Entladevorgang), erzwingt die aufgebaute magnetische Energie W einen Stromfluss $I_A$', der in Richtung der Diode 18 fließt. Durch die Diode 18 wird sichergestellt, dass der Strom $I_A$' nur in eine Richtung fließen kann.

Der Strom $I_A$' teilt sich bei geöffnetem Schaltelement 16 auf, und zwar in den Strom $I_A$ durch die mindestens eine Halbleiterlichtquelle 12 und einen Strom $I_C$, der den Kondensator 20 belädt. Der Strom $I_A$ speist die mindestens eine Halbleiterlichtquelle 12 am Ausgang des Gleichspannungswandlers 10. Der Strom $I_C$ umfasst einen sog. Rippelstrom (überlagerter Wechselstrom), der durch den Kondensator 20 geglättet bzw. reduziert wird. Je höher die Kapazität des Kondensators 20 ist, desto kleiner ist der Rippelstrom. Der Strom $I_A$ fließt so lange durch die Halbleiterlichtquelle 12 wie das Schaltelement 16 geöffnet ist und wie noch Energie in der Speicherdrossel 14 gespeichert ist, die den Stromfluss $I_A$ speisen kann.

Wird das Schaltelement 16 geschlossen, wird in der Speicherdrossel 14 wieder magnetische Energie aufgebaut. Dabei fließt kein oder nur noch ein sehr geringer Strom $I_A$ durch die mindestens eine Halbleiterlichtquelle 12. Die Schaltfrequenz des Schaltelements 16 wird jedoch so hoch gewählt, dass die theoretisch vorliegenden dunkleren (oder gar ausgeschalteten) Phasen der mindestens einen Halbleiterlichtquelle 12 für das menschliche Auge nicht wahrnehmbar sind. Je nach Länge der dunkleren Phasen der Halbleiterlichtquelle 12 erscheint dem Beobachter die Lichtquelle 12 nur kontinuierlich mehr oder weniger hell leuchtend.

Zum Regeln des Stroms $I_A$ beim Betreiben der mindestens einen Halbleiterlichtquelle 12 ist es notwendig, den aktuellen Istwert des durch die mindestens eine Halbleiterlichtquelle 12 fließenden Stroms $I_A$ zu ermitteln. In dem erfindungsgemäßen Verfahren wird dazu auf eine direkte Strommessung, z.B. über einen Spannungsabfall an einem Messwiderstand, verzichtet. Stattdessen wird in dem erfindungsgemäßen Verfahren -die in dem Speicherelement, in dem vorliegenden Beispiel in der Speicherdrossel 14, gespeicherte Energie ermittelt und daraus dann auf den aktuellen Wert des Stroms $I_A$ geschlossen. Zur Verbesserung der Genauigkeit der Energieermittlung und der Schätzung des Stroms $I_A$ können noch zusätzliche Betriebsparameter und/oder statische bzw. dynamische Betriebsgrößen des Gleichspannungswandlers 10 berücksichtigt werden. Dazu zählen bspw. die bekannte Induktivität L der Speicherdrossel 14 und der Eingangsstrom $I_E$. Bei einer Verwendung eines Speicherkondensators kann die in dem Energiespeicher speicherbare Energie über die Kapazität des Speicherkondensators und die anliegende Eingangsspannung berücksichtigt werden (nicht dargestellt).

Um eine möglichst genaue Ermittlung des Ausgangsstroms $I_A$ zum Betreiben der mindestens einen Halbleiterlichtquelle 12 zu erreichen, werden weitere Betriebsparameter des Gleichspannungswandlers 10 berücksichtigt, mit denen auf der Basis der gespeicherten Energie des Speicherelements die Ausgangsstromstärke $I_A$ des Gleichspannungswandlers 10, z.B. rechnerisch, ermittelt wird. So können zum Beispiel konstante Betriebsgrößen des Gleichspannungswandlers 10 verarbeitet werden. Es können aber auch dynamische Betriebsgrößen des Gleichspannungswandlers 10 berücksichtigt werden.

Die weiteren, im erfindungsgemäßen Verfahren verwendbaren Betriebsgrößen des Gleichspannungswandlers 10 können dabei z.B. umfassen: die Eingangsspannung $U_E$, die Ausgangsspannung $U_A$, einen elektrischen Widerstandswert und/oder einen Tastgrad des Schaltelements 16. Zumindest diese Betriebsgrößen haben einen Einfluss auf die Funktion des Gleichspannungswandlers 10 und insbesondere auf die in dem Speicherelement gespeicherte Energie. Andere erfassbare Betriebsgrößen des Gleichspannungswandlers 10, die die Funktion des Gleichspannungswandlers 10 bzw. die in dem Speicherelement gespeicherte Energie beeinflussen, können natürlich auch berücksichtigt werden. Außerdem kann im erfindungsgemäßen Verfahren z.B. ein Eingangswiderstand und/oder ein Ausgangswiderstand des Gleichspannungswandlers 10 berücksichtigt werden. Diese sind entweder bekannt oder können während des Betriebs des Wandlers 10 ermittelt werden. Die Widerstände stellen im Wesentlichen konstante Größen dar, wobei bei Bedarf bei der Ermittlung des jeweiligen Widerstands auch der Tastgrad des Schaltelements 16 (Schaltfrequenz) berücksichtigt werden kann.

Auch die elektrischen Eigenschaften der einzelnen Bauelemente des Gleichspannungswandlers 10, z. B. der Diode 18, können als Werte oder über Kennlinien bei der Ermittlung der in dem Speicherelement gespeicherten Energie und der Abschätzung des Stroms $I_A$ berücksichtigt werden. Da die elektrischen Eigenschaften der elektrischen Bauteile in der Regel temperaturabhängig sind, kann auch eine Temperatur des Gleichspannungswandlers 10 oder von Teilen davon, wie z.B. die Temperatur der Speicherdrossel 14, des Schaltelements 16 und/oder des Kondensators 20 berücksichtigt werden. Die Berücksichtigung kann über den konkreten Temperaturwert und/oder über entsprechende Kennlinien (elektrische Eigenschaft/ Temperatur) erfolgen.

Als Ergebnis kann aus den Betriebsgrößen des Gleichspannungswandlers 10 die Ausgangsstromstärke $I_A$ des Gleichspannungswandlers 10 zum Betreiben der mindestens einen Halbleiterlichtquelle 12 genau ermittelt werden, die entsprechend der Anforderungen vom Steuergerät 2 zur Regelung der Stromstärke $I_A$ zum Betreiben der mindestens einen Halbleiterlichtquelle 12 verwendet werden kann.

**Patentansprüche**

1. Verfahren zum Einstellen einer Stromstärke ($I_A$) zum Betreiben mindestens einer Halbleiterlichtquelle (12) einer Beleuchtungseinrichtung, **dadurch gekennzeichnet, dass** eine in einem Speicherelement eines zum Betreiben der mindestens einen Halbleiterlichtquelle (12) verwendeten Gleichspannungswandlers (10) gespeicherte Energie ermittelt und daraus die Stromstärke ($I_A$) zum Betrieb der mindestens einen Halbleiterlichtquelle (12) eingestellt wird.

2. Verfahren nach Anspruch 1, **dadurch gekennzeichnet, dass** das Speicherelement eine Speicherdrossel (14) und/oder einen Speicherkondensator umfasst.

3. Verfahren nach Anspruch 1 oder 2, **dadurch gekennzeichnet, dass** die in dem Speicherelement des Gleichspannungswandlers (10) gespeicherte Energie in Abhängigkeit von einem Induktivitätswert bzw. eines Kapazitätswerts des Speicherelements ermittelt wird.

4. Verfahren nach einem der Ansprüche 1 bis 3, **dadurch gekennzeichnet, dass** die in dem Speicherelement des Gleichspannungswandlers (10) gespeicherte Energie in Abhängigkeit von einer Eingangsspannung ($U_E$) des Gleichspannungswandlers (10) und/oder einer Ausgangsspannung ($U_A$) des Gleichspannungswandlers (10) ermittelt wird.

5. Verfahren nach einem der Ansprüche 1 bis 4, **dadurch gekennzeichnet, dass** die in dem Speicherelement des Gleichspannungswandlers (10) gespeicherte Energie in Abhängigkeit von einer Temperatur des Gleichspannungswandlers (10) oder von Teilen davon ermittelt wird.

6. Verfahren nach einem der Ansprüche 1 bis 5, **dadurch gekennzeichnet, dass** die in dem Speicherelement des Gleichspannungswandlers (10) gespeicherte Energie in Abhängigkeit von einem Kapazitätswert eines am Ausgang des Gleichspannungswandlers (10) angeordneten Kondensators (20), einem elektrischen Widerstandswert des Gleichspannungswandlers (10), einer elektrischen Eigenschaft einer Diode (18) des Gleichspannungswandlers (10) und/oder einem Tastgrad eines Schalters (16) des Gleichspannungswandlers (10) zum Umschalten zwischen einem Ladevorgang und einem Entladevorgang des Speicherelements.

7. Steuergerät (2) zum Betreiben mindestens einer Halbleiterlichtquelle (12) einer Beleuchtungseinrichtung, **dadurch gekennzeichnet, dass** das Steuergerät (2) Mittel zur Ausführung eines Verfahrens nach einem der Ansprüche 1 bis 6 aufweist.

8. Steuergerät (2) nach Anspruch 7, **dadurch gekennzeichnet, dass** das Steuergerät (2) eine Verarbeitungseinrichtung (4) umfasst, auf der ein Computerprogramm abläuft, das zur Ausführung eines Verfahrens nach einem der Ansprüche 1 bis 6 programmiert ist.

9. Steuergerät (2) nach Anspruch 8, **dadurch gekennzeichnet, dass** die Verarbeitungseinrichtung (4) einen Mikroprozessor umfasst.

Fig. 1

Fig. 2

Fig. 3

Fig. 4

Europäisches
Patentamt

European
Patent Office

Office européen
des brevets

# EUROPÄISCHER RECHERCHENBERICHT

Nummer der Anmeldung

EP 14 16 9248

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 888 383 B1 (FAIRBANKS JOHN PATRICK [US]) 3. Mai 2005 (2005-05-03) | 1-4,7-9 | INV. H02M1/32 H05B33/08 |
| Y | * Spalte 4, Zeilen 15-65 - Spalte 5, Zeilen 30-30; Abbildungen 1-3 * | 5,6 | |
| X | US 6 320 330 B1 (HAAVISTO JANNE [FI] ET AL) 20. November 2001 (2001-11-20) * Spalte 8, Zeilen 17-29; Abbildungen 3-5 * | 1-4,7-9 | |
| Y | US 8 076 920 B1 (MELANSON JOHN L [US]) 13. Dezember 2011 (2011-12-13) * Spalte 7, Zeile 19 - Spalte 8, Zeile 65; Abbildungen 2b, 4 * | 2-4,6,8,9 | |
| Y | DE 10 2008 025748 A1 (AUTOMOTIVE LIGHTING REUTLINGEN [DE]) 3. Dezember 2009 (2009-12-03) * Absätze [0024], [0025]; Abbildung 2 * * * | 2-6,8,9 | |
| A,D | DE 10 2010 061042 A1 (HELLA KGAA HUECK & CO [DE]) 6. Juni 2012 (2012-06-06) * Abbildung 1 * | 1-9 | RECHERCHIERTE SACHGEBIETE (IPC) H02M H05B |

Der vorliegende Recherchenbericht wurde für alle Patentansprüche erstellt

| Recherchenort | Abschlußdatum der Recherche | Prüfer |
|---|---|---|
| München | 18. Juli 2014 | Müller, Uta |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 9248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2014

| Im Recherchenbericht angeführtes Patentdokument | Datum der Veröffentlichung | Mitglied(er) der Patentfamilie | Datum der Veröffentlichung |
|---|---|---|---|
| US 6888383 B1 | 03-05-2005 | KEINE | |
| US 6320330 B1 | 20-11-2001 | AT 413085 T<br>EP 1033903 A2<br>FI 991140 A<br>JP 2000232241 A<br>US 6320330 B1 | 15-11-2008<br>06-09-2000<br>23-07-2000<br>22-08-2000<br>20-11-2001 |
| US 8076920 B1 | 13-12-2011 | KEINE | |
| DE 102008025748 A1 | 03-12-2009 | CN 101594715 A<br>DE 102008025748 A1<br>FR 2932032 A1 | 02-12-2009<br>03-12-2009<br>04-12-2009 |
| DE 102010061042 A1 | 06-06-2012 | CN 103348575 A<br>DE 102010061042 A1<br>EP 2673869 A1<br>WO 2012076457 A1 | 09-10-2013<br>06-06-2012<br>18-12-2013<br>14-06-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010061042 A1